# EUROPÄISCHE PATENTSCHRIFT

(11) **EP 4 386 720 B1**
(45) Veröffentlichungstag und Bekanntmachung des Hinweises auf die Patenterteilung: **21.10.2026**
(21) Anmeldenummer: 23209445.8
(22) Anmeldetag: 13.11.2023
(51) Int. Cl.: G09B 9/02, B64F 1/223, B64F 5/60, B64C 25/00, G09B 19/16

(54) **FLUGZEUG-DUMMY**
AIRCRAFT DUMMY
MANNEQUIN D'AÉRONEF

(30) Priorität: 15.12.2022 DE 102022133441
(43) Veröffentlichungstag der Anmeldung: 19.06.2024
(73) Patentinhaber: Deutsche Post AG, 53113 Bonn (DE)
(72) Erfinder: HAIN, Marcel, 04158 Leipzig (DE)
(74) Vertreter: Michalski Hüttermann & Partner mbB

(56) Entgegenhaltungen:
- GB-A- 2 454 275
- US-A- 3 142 494

## Beschreibung

### Technisches Gebiet

Die Erfindung betrifft einen Flugzeug-Dummy zum Emulieren wenigstens eines Flugzeugtyps.

Zudem betrifft die Erfindung die Verwendung eines Fahrgestells als Flugzeug-Dummy.

### Hintergrund der Erfindung

In der Luftfahrt wird unter "Pushback" ein Zurückschieben eines Flugzeuges verstanden, bei dem das Flugzeug von seiner Ruheposition durch extern bereitgestellten Schub rückwärts geschoben wird. Das Zurückschieben durch externen Schub ist notwendig, da viele Flugzeuge keine Möglichkeit besitzen, aus eigener Kraft rückwärtszurollen und/oder nicht rückwärts rollen dürfen. Der Pushback wird von speziell dafür entwickelten Fahrzeugen, den sogenannten Flugzeugschleppern durchgeführt. Beim Pushback wird das Flugzeug also vom Flugzeugschlepper rückwärts bewegt.

Um das Positionieren und/oder Rangieren von Flugzeugen beispielsweise an Fluggastbrücken und/oder aus einem Hangar heraus mittels Flugzeugschleppern zu üben, werden üblicherweise sogenannte Flugzeug-Dummies - auch Vorfeld-Trainer genannt - verwendet, da das Trainieren an realen Flugzeugen mit hohen Kosten, insbesondere im Falle eines Schadens am Flugzeug, verbunden wäre. Durch das Training am Flugzeug-Dummy wird das Risiko von Beschädigungen am realen Flugzeug während des Trainings ausgeschlossen. Zudem können die komplexen Arbeitsabläufe ohne Risiko geübt werden, so dass auch die Wahrscheinlichkeit für einen Schaden im realen Betrieb am Flugzeug sinkt.

Der Pushback des Flugzeuges wie auch des Flugzeug-Dummies, der das reale Flugzeug nachbildet, erfolgt entweder über eine Schubstange (auch Schleppstange genannt, englisch *towbar),* die zwischen Flugzeug und Flugzeugschlepper bzw. Flugzeug-Dummy und Flugzeugschlepper gekoppelt ist, oder über einen Hubschlepper, bei dem das Bugfahrwerk des Flugzeuges bzw. das entsprechend analoge Vorderrad des Flugzeug-Dummies angehoben wird.

Da während des Pushbacks des Flugzeuges die flugzeuginterne Steuerung des Bugfahrwerkes deaktiviert ist, und somit frei nach links und rechts schwenkbare ist, erfolgt die Lenkung des Flugzeuges während des Pushbacks um eine Kurve durch das Zusammenspiel der Lenkbewegungen des Flugzeugschleppers, und dem Bugfahrwerk des Flugzeuges auf eine komplexe Weise, wobei dabei das Lenkverhalten auch vom spezifischen Flugzeugtyp und insbesondere den Dimensionen des Flugzeuges bzw. dessen Fahrwerk abhängt.

Das Ziel des Flugzeug-Dummies ist es, dieses komplexe Lenkverhalten nachzubilden. Nachteilig an bekannten Flugzeug-Dummies ist allerdings, dass diese lediglich einen spezifischen Flugzeugtyp nachbilden, so dass mehrere unterschiedliche Flugzeug-Dummies bereitgehalten werden müssen, um den Pushback von unterschiedlichen Flugzeugtypen zu üben. Es besteht also Bedarf an flexiblen Flugzeug-Dummies.

Aus dem Fachartikel von HÖHN, Sebastian "Flugzeug-Dummy: Multitalent auf dem Vorfeld" in Dekra Solutions Magazin, DEKRA e.V. (Handwerkstraße 15, 70565 Stuttgart) abrufbar unter https://www.dekra-solutions.com/2020/10/flugzeug-dummymultitalent-auf-dem-vorfeld ist ein Flugzeug-Dummy bekannt, der dem Bodenpersonal ermöglicht, alle Situationen zu proben, um Schäden und Unfälle zu vermeiden.

Die Druckschrift US 2 774 557 A betrifft Verbesserungen an oder im Zusammenhang mit Flugzeugstartwagen, die insbesondere für die Verwendung als Hilfsgerät geeignet sind, um taktischen Flugzeugen den Start von allen Arten von Flugplätzen oder Start- und Landebahnen zu ermöglichen.

Die Druckschrift DE 10 2008 023 698 A1 bezieht sich auf eine Vorrichtung in Form einer bodengebundenen Einrichtung für den Start-, Lande- und Rollvorgang von Flugzeugen oder Flugobjekten ohne Fahrwerksystem oder mit eingezogenem Fahrwerk, die aus den drei Hauptkomponenten Schlitten, Wagen und Bodenfahrwerk besteht und, soweit möglich, folgende Hauptmerkmale aufweist: a) keine wesentlichen Änderungen der bestehenden Betriebsabläufe, der Piloten- bzw. Autopiloten- und Flugverkehrskontrollprozeduren; b) weitgehendes Beibehalten bestehender Flughafen- und Landebahnstrukturen; c) duale Benutzbarkeit der Landebahn von konventionellen und fahrwerklosen Flugzeugen; d) minimaler Umrüstaufwand bestehender Flugzeuge; e) Unterstützung der Beschleunigung des Flugzeuges beim Start; f) gleichzeitige Abfertigung mehrerer Flugzeuge am Flughafen; g) vor- und rückwärtiges Rollen am Boden mit abgeschalteten Haupttriebwerken; h) Nutzung der Bremsenergie.

Die Druckschrift US 3 142 494 A beschreibt einen Anhänger zum Transport von Booten, der eine zweirädrige Ladefläche zur Unterstützung eines Bootes, und eine teleskopierbare Auslegeranordnung, die an der Ladefläche befestigt ist und sich entlang einer Längsachse erstreckt, umfasst. Es ist vorgesehen, dass die Auslegeranordnung ein äußeres Rohrelement von im Wesentlichen der gleichen Länge wie der Anhänger, ein inneres Element, das in das äußere Element eingebettet ist und in Bezug dazu von einer eingebetteten in eine ausgefahrene Position bewegt werden kann, umfasst.

Die Druckschrift GB 2 454 275 A betrifft eine platzsparende, zusammenklappbare Trainingsvorrichtung in Form eines gleichseitigen Dreiecks zum Schleppen hinter einem Flugzeugschlepper, um ein Flugzeug zu simulieren und so die Ausbildung eines Schlepperfahrers zu ermöglichen.

### Beschreibung der Erfindung

Ausgehend von dieser Situation ist es eine Aufgabe der vorliegenden Erfindung, einen Flugzeug-Dummy bereitzustellen, der unterschiedliche Flugzeugtypen nachbildet.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch einen Flugzeug-Dummy zum Emulieren wenigstens eines Flugzeugtyps, insbesondere zum Emulieren mehrerer Flugzeugtypen gelöst, umfassend ein Fahrgestell mit einer Querachse und einer senkrecht zur Querachse verlaufenden Längsachse, wobei der Flugzeug-Dummy wenigstens zwei an der Querachse aufgehängte Hinterräder und wenigstens ein Vorderrad umfasst, wobei das Vorderrad um eine senkrecht zur Längsachse und senkrecht zur Querachse verlaufende Vertikalachse drehbar ist, und wobei die Querachse zur Veränderung einer Breite des Flugzeug-Dummies und die Längsachse zur Veränderung einer Längserstreckung des Flugzeug-Dummies längenveränderbar ausgestaltet sind.

Weiterhin wird die Aufgabe durch die Verwendung eines Fahrgestells als Flugzeug-Dummy gelöst, wobei das Fahrgestell eine Querachse und eine senkrecht zur Querachse verlaufende Längsachse und wenigstens zwei an der Querachse aufgehängte Hinterräder und wenigstens ein Vorderrad umfasst, wobei das Vorderrad um eine senkrecht zur Längsachse und senkrecht zur Querachse verlaufende Vertikalachse drehbar ist, und wobei die Querachse zur Veränderung einer Breite des Fahrgestells und/oder die Längsachse zur Veränderung einer Längserstreckung des Fahrgestelles längenveränderbar ausgestaltet sind.

Erfindungsgemäß ist die Querachse zur Veränderung der Breite und insbesondere der Spurbreite des Flugzeug-Dummies und die Längsachse zur Veränderung der Längserstreckung des Flugzeug-Dummies längenveränderbar ausgestaltet. Dies ermöglicht unterschiedliche Flugzeugtypen mit lediglich einem Flugzeug-Dummy nachzubilden. Entsprechend kann auf das Anschaffen von mehreren Flugzeug-Dummies verzichtet werden. Somit handelt es sich bevorzugt um einen Flugzeug-Dummy, der geeignet ist, unterschiedliche Flugzeugtypen zu emulieren und/oder das Lenkverhalten beim Pushback unterschiedlicher Flugzeugtypen nachzubilden.

Ein Aspekt der Erfindung ist das Fahrgestell, das die Querachse und die senkrecht zur Querachse verlaufende Längsachse umfasst. An der Querachse sind die wenigstens zwei Hinterräder aufgehängt. Bevorzugt sind die Hinterräder an zwei einander gegenüberliegenden Enden der Querachse aufgehängt. Bevorzugt ist das wenigstens eine Vorderrad über die Vertikalachse mit der Längsachse verbunden, derart dass das wenigstens eine Vorderrad bevorzugt an einem Ende der Längsachse angeordnet ist. Somit sind bevorzugt die Räder des Flugzeug-Dummies entsprechend einem Dreieck angeordnet. Durch die Längsachse, die Querachse und die Radanordnung ergibt sich bevorzugt eine dreieckige Anordnung der Räder des Flugzeug-Dummies. Derart lässt sich besonders gut ein Dreipunkt-Fahrwerk und insbesondere ein sogenanntes Bugradfahrwerk *(tricycle-*/*nose gear)* eines realen Flugzeuges nachbilden.

Die Breite des Flugzeug-Dummies ist bevorzugt durch den Abstand zwischen den zwei Hinterrädern definiert, die auch als Spurbreite bezeichnet wird. Die Längserstreckung des Flugzeug-Dummies ist bevorzugt durch den kürzesten Abstand zwischen dem Vorderrad und einer die beiden Hinterräder verbindenden Strecke definiert. Die Breite wie auch die Längserstreckung des Flugzeug-Dummies beeinflussen die Eigenschaften wie sich der Flugzeug-Dummy beim Rangieren mit einem Flugzeugschlepper verhält. Somit können durch Verstellen der Breite und/oder Verstellen der Längserstreckung des Flugzeug-Dummies unterschiedliche Flugzeugtypen emuliert werden. Da der Flugzeug-Dummy ein reales Flugzeug nachbildet entsprechen typische Ausmaße des Flugzeug-Dummies bevorzugt den Ausmaßen des Fahrwerks von realen Flugzeugen. Bevorzugt ist der Flugzeug-Dummy in Bezug zur Längserstreckung zwischen 5 m und 20 m und/oder in Bezug zur Breite zwischen 2 m und 7 m groß.

In Bezug zum Fahrgestell ist gemäß einer bevorzugten Weiterbildung der Erfindung vorgesehen, dass das Fahrgestell T-förmig ausgestaltet ist. Bevorzugt entspricht die Längsachse der senkrechten Linie des "T" und die Querachse der waagerechten Linie des "T". In anderen Worten ist also bevorzugt vorgesehen, dass die Längsachse und die Querachse des Fahrgestells miteinander verbunden sind, wobei insbesondere ein Ende der Längsachse mit einer Mitte der Querachse verbunden ist. Weiter bevorzugt weist das T-förmige Fahrgestell bevorzugt zwei Diagonalverstrebungen auf. Die Diagonalverstrebungen verbinden bevorzugt jeweils die Längsachse mit der Querachse. Die Diagonalverstrebungen erhöhen die Stabilität des Fahrgestells.

Gemäß einer weiteren bevorzugten Weiterbildung der Erfindung ist vorgesehen, dass die Querachse und/oder die Längsachse zur Längenveränderung teleskopierbar ausgestaltet sind. Besonders bevorzugt sind die Querachse und die Längsachse als Teleskopauszüge ausgestaltet. Grundsätzlich ist es möglich, dass die Längsachse und/oder die Querachse jeweils von einer Vielzahl von ineinandergreifenden Stücken gebildet werden. Bevorzugt ist vorgesehen, dass die Längsachse von zwei ineinandergreifenden Stücken gebildet wird. Diese erhöht die Stabilität des Fahrgestells. In Bezug zur Querachse ist bevorzugt vorgesehen, dass die Querachse von drei ineinandergreifenden Stücken gebildet wird. Bevorzugt ist die Längsachse und weiter bevorzugt sind die Diagonalverstrebungen mit einem Mittelstück der Querachse verbunden.

Gemäß einer weiteren bevorzugten Weiterbildung der Erfindung ist vorgesehen, dass das Fahrgestell genau drei Teleskopauszüge umfasst. Dies hat den Vorteil, dass das Fahrgestellt aufgrund der einfachen Konstruktion sehr robust ist. Bevorzugt weist die Längsachse einen Teleskopauszug und die Querachse zwei Teleskopauszüge auf. Die Ausgestaltung der Querachse aus drei ineinandergreifenden Stücken und/oder mit zwei Teleskopauszügen ermöglicht, dass nicht nur die Breite und insbesondere die Spurbreite des Flugzeug-Dummies veränderbar ist, sondern auch, dass ein Winkel zwischen der Längsachse und einer Linie, die das Vorderrad mit dem Hinterrad verbindet, für jedes Hinterrad individuell einstellbar ist.

In Bezug zu den Teleskopauszügen ist gemäß einer weiteren bevorzugten Weiterbildung vorgesehen, dass die Längsachse und/oder Querachse zur Arretierung einer Längeneinstellung eine durch die Längsachse verlaufende Öffnung und einen Arretierungsstift umfasst. Bevorzugt weist zumindest eines der ineinandergreifenden Stücke mehrere nebeneinander angeordnete Öffnungen auf. Eine solche Arretierung ermöglicht eine besonders einfache und robuste Ausgestaltung.

In Bezug zum Vorderrad ist gemäß einer weiteren bevorzugten Weiterbildung der Erfindung vorgesehen, dass das Vorderrad um 360 Grad um die Vertikalachse drehbar ist. Bevorzugt ist das Vorderrad sogar mehrfach vollständig drehbar, sprich es kann nach einer 360 Grad Drehung auch weiter in die gleiche Richtung gedreht werden. In diesem Zusammenhang ist gemäß einer weiteren bevorzugten Weiterbildung der Erfindung vorgesehen, dass der Flugzeug-Dummy zur Drehung des Vorderrades um die Vertikalachse einen Gelenkkopf umfasst. Bevorzugt umfasst der Gelenkkopf ein Kugellager und/oder Wälzlager und/oder es handelt es sich um einen Kugellagergelenkkopf. Derart kann auf einfache Weise die beim Pushback des Flugzeugs deaktivierte flugzeuginterne Steuerung des Bugfahrwerkes nachgebildet werden.

Gemäß einer weiteren bevorzugten Weiterbildung der Erfindung ist vorgesehen, dass die Querachse an beiden Enden rechtwinklig abgewinkelt ist, derart dass ein Anteil der Querachse parallel zur Vertikalachse verläuft. Entsprechend wird die Bodenfreiheit des Flugzeug-Dummys bevorzugt nicht ausschließlich über einen Durchmesser der Hinterräder bestimmt, sondern auch über die Länge des parallel zur Vertikalachse verlaufenden Anteiles der Querachse. Dies macht es besonders einfach einen Flugzeug-Dummy bereitzustellen, der eine ausreichende Bodenfreiheit aufweist, um ein um 360 Grad drehbares Vorderrad bereitstellen zu können. Außerdem wird dadurch gewährleistet, dass der Flugzeug-Dummy während des Lenkens nicht mit dem Flugzeugschlepper kollidiert. Bevorzugt beträgt die Bodenfreiheit wenigstens 1300 mm.

Gemäß einer weiteren bevorzugten Weiterbildung der Erfindung ist vorgesehen, dass das Vorderrad eine senkrecht zur Vertikalachse verlaufende Radachse und zwei an der Radachse angebrachte Reifen umfasst. Bevorzugt ist das Vorderrad also als Doppelrad ausgestaltet. Das Vorderrad ist also bevorzugt entsprechend einem Bugrad bei einem realen Flugzeug ausgestaltet, bei dem die Ausgestaltung als Doppelrad für die notwendige Stabilität sorgt. Die Radachse ist zudem bevorzugt in einer Ebene angeordnet, die von der Querachse und der Längsachse aufgespannt wird.

Gemäß einer weiteren bevorzugten Weiterbildung der Erfindung ist vorgesehen, dass das Vorderrad zur Kopplung mit einem Flugzeugschlepper ausgestaltet ist. Besonders bevorzugt ist vorgesehen, dass das Vorderrad mit einer Schubstange koppelbar ist und/oder dass das Vorderrad von beiden Seiten mittels eines Flugzeugschleppers umschließbar ist. Grundsätzlich existieren zwei Möglichkeiten wie Flugzeugschlepper mit dem Flugzeug interagieren, um den Pushback durchführen, wobei beide Möglichkeiten bevorzugt durch den Flugzeug-Dummy abgebildet sind. In einer ersten Möglichkeit wird das Bugrad des Flugzeuges mittels der Schubstange (auch Schleppstange, englisch *towbar)* mit dem Flugzeugschlepper verbunden. Um diese Möglichkeit beim Flugzeug-Dummy abzubilden, ist das Vorderrad des Flugzeug-Dummies bevorzugt mit der Schubstange koppelbar. In einer alternativen Möglichkeit wird das Flugzeug ohne Schubstange bewegt, indem das Bugrad des Flugzeuges vom Flugzeugschlepper angehoben wird, was auch als *Nose-Lift* bezeichnet wird. Dazu umgreift eine hydraulische Vorrichtung des Flugzeugschleppers das Bugrad und hebt es an. Um diese Möglichkeit beim Flugzeug-Dummy abzubilden, ist das Vorderrad des Flugzeug-Dummies bevorzugt von beiden Seiten mittels des Flugzeugschleppers umschließbar ausgestaltet.

In Bezug zum Vorderrad ist gemäß einer weiteren bevorzugten Weiterbildung der Erfindung vorgesehen, dass das Vorderrad zum Ankoppeln an die Schubstange einen senkrecht zur Vertikalachse verlaufenden Bolzen umfasst. Der Bolzen verläuft bevorzugt parallel zur Radachse und/oder ist in der Ebene angeordnet, die von der Querachse und der Längsachse aufgespannt wird. Beim Pushback mittels der Schubstange wird die Schubstange bevorzugt starr an den Bolzen des Vorderrades angekoppelt und allseitig schwenkbar auf Seiten des Flugzeugschleppers gelagert. Das Lenken des Flugzeug-Dummies mittels des Flugzeugschleppers erfolgt somit ähnlich einer Deichsel bei einem mehrachsigen Anhänger durch das Zusammenspiel der Lenkbewegungen des Flugzeugschleppers, der Schubstange und dem Vorderrad des Flugzeug-Dummies.

Um ein Beschädigen des Flugzeuges, des Flugzeug-Dummies und/oder der Schubstange zu vermeiden ist gemäß einer weiteren bevorzugten Weiterbildung der Erfindung zudem vorgesehen, dass der Bolzen um seine Längsachse drehbar gelagert ist. Dies verhindert, dass während des Pushbacks Beschädigungen auftreten. Die Längsachse des Bolzens ist bevorzugt parallel zur Radachse.

Weiterhin ist bevorzugt vorgesehen, dass der Bolzen eine Länge von wenigstens 150 mm umfasst und/oder eine Länge von nicht mehr als 210 mm umfasst. Beispielsweise ist die Länge des Bolzens 180 mm. Weiter bevorzugt weist der Bolzen einen Durchmesser von wenigstens 30 mm auf und/oder einen Durchmesser von nicht mehr als 45 mm auf. Beispielsweise beträgt der Durchmesser des Bolzens 36 mm. Dies entspricht dem Durchmesser des Bolzens bei einer Boeing 757. Diese Maße ermöglichen, dass die gleichen Schubstangen zur Kopplung mit dem Flugzeug-Dummy verwendet werden können, wie sie zur Kopplung mit realen Flugzeugen genutzt werden. Weiter bevorzugt ist vorgesehen, dass der Durchmesser des Bolzens auf die Schubstange abgestimmt ist.

Gemäß einer weiteren bevorzugten Weiterbildung der Erfindung ist vorgesehen, dass ein Reifen des Vorderrads einen Durchmesser von 595 mm aufweist. Weiter bevorzugt ist eine Breite des Reifen des Vorderrades 235 mm. Besonders bevorzugt weist der Reifen des Vorderrades Dimensionen von 235/75 R17,5 auf. Dies entspricht bevorzugt den bei realen Flugzeugen verwendeten Reifendimensionen.

In diesem Zusammenhang ist gemäß einer weiteren bevorzugten Weiterbildung der Erfindung vorgesehen, dass eine Traglast des Vorderrades wenigstens 80 t beträgt. Bevorzugt beträgt die Traglast genau 80 t, weiter bevorzugt mehr als 100 t, beispielsweise 121 t. Eine Traglast in diesem Bereich ist vorteilig, da hierdurch ein Platzen der Bereifung des Vorderrades durch das Spannen mittels einer hydraulischen Vorrichtung am Flugzeugschlepper beim *Nose-Lift* verhindert werden kann.

Gemäß einer weiteren bevorzugten Weiterbildung der Erfindung ist vorgesehen, dass die Längserstreckung des Flugzeug-Dummies bei der geringsten Längeneinstellung der Längsachse kleiner als 9 m, bevorzugt kleiner als 8 m und besonders bevorzugt kleiner als 7 m ist. Beispielsweise beträgt die Längserstreckung des Flugzeug-Dummies bei der geringsten Längeneinstellung der Längsachse 6550 mm. Weiter bevorzugt ist die Längserstreckung des Flugzeug-Dummies bei der größten Längeneinstellung der Längsachse größer als 12 m, bevorzugt größer als 13 m und besonders bevorzugt größer als 14 m. Beispielsweise beträgt die Längserstreckung des Flugzeug-Dummies bei der größten Längeneinstellung der Längsachse 14987 mm.

In Bezug zur Breite des Flugzeug-Dummies ist bevorzugt vorgesehen, dass die Breite des Flugzeug-Dummies bei der geringsten Längeneinstellung der Querachse kleiner als 3,5 m, bevorzugt kleiner als 2 m und besonders bevorzugt kleiner als 2,8 m ist. Beispielsweise beträgt die Breite des Flugzeug-Dummies bei der geringsten Längeneinstellung der Querachse 2730 mm. Weiter bevorzugt ist die Breite des Flugzeug-Dummies bei der größten Längeneinstellung der Querachse größer als 4 m, bevorzugt größer als 4,5 m und besonders bevorzugt größer als 5 m. Beispielsweise beträgt die Breite des Flugzeug-Dummies bei der größten Längeneinstellung der Querachse 5230 mm.

Gemäß einer weiteren bevorzugten Weiterbildung der Erfindung weist der Flugzeug-Dummy über dem Vorderrad angeordnete reflektierende Flächen auf. Bevorzugt sind die reflektierenden Flächen an der Vertikalachse über dem Vorderrad angebracht. Weiter bevorzugt sind die reflektierenden Flächen in Bezug zur Längsachse und/oder Querachse nicht drehbar. Insbesondere sind die reflektierenden Flächen derart angeordnet, dass sie den Landescheinwerfern des Flugzeuges entsprechen. Derart werden von den reflektierenden Flächen bei Lichteinfall die gleichen für den Fahrer des Flugzeugschleppers eventuell störenden Reflektionen erzeugt, wie von einem Flugzeug. Entsprechend lassen sich auch solche Situationen mit dem Flugzeug-Dummy üben.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigt
- Fig. 1: eine schematische perspektivische Ansicht eines Flugzeug-Dummies, gemäß einem bevorzugten Ausführungsbeispiel der Erfindung,
- Fig. 2: eine schematische Darstellung des Flugzeug-Dummies aus Figur 1 von oben,
- Fig. 3: eine weitere schematisch perspektivische Ansicht des Flugzeug-Dummies aus Figur 1,
- Fig. 4: eine weitere schematisch perspektivische Ansicht des Flugzeug-Dummies aus Figur 1 von vorne, und
- Fig. 5: eine schematische vergrößerte Darstellung eines Vorderrades des Flugzeug-Dummies aus Figur 1.

### Detaillierte Beschreibung des Ausführungsbeispiels

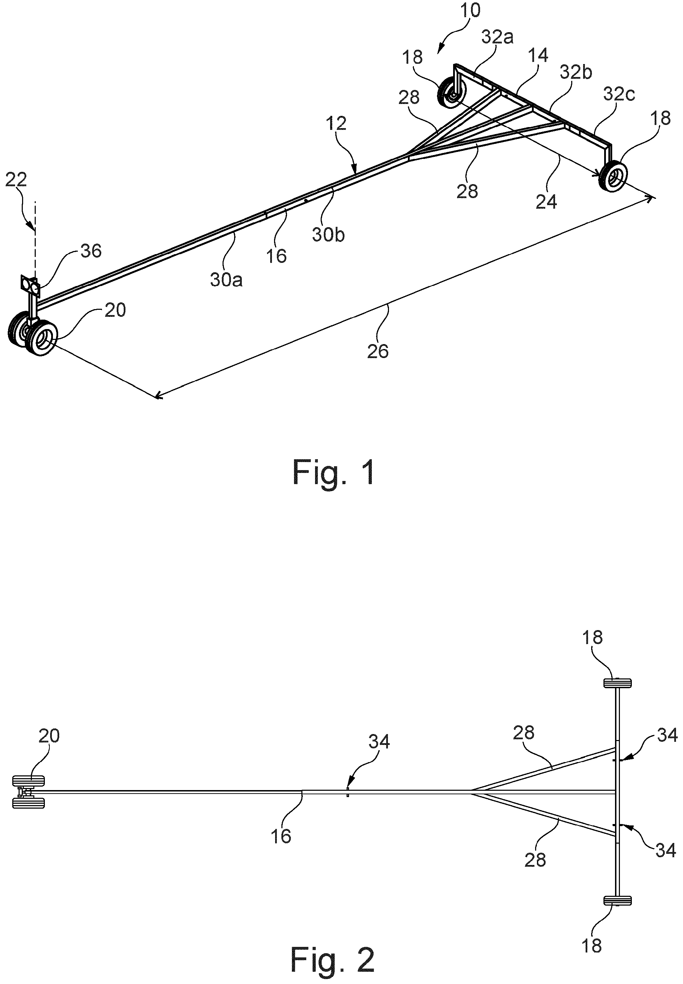

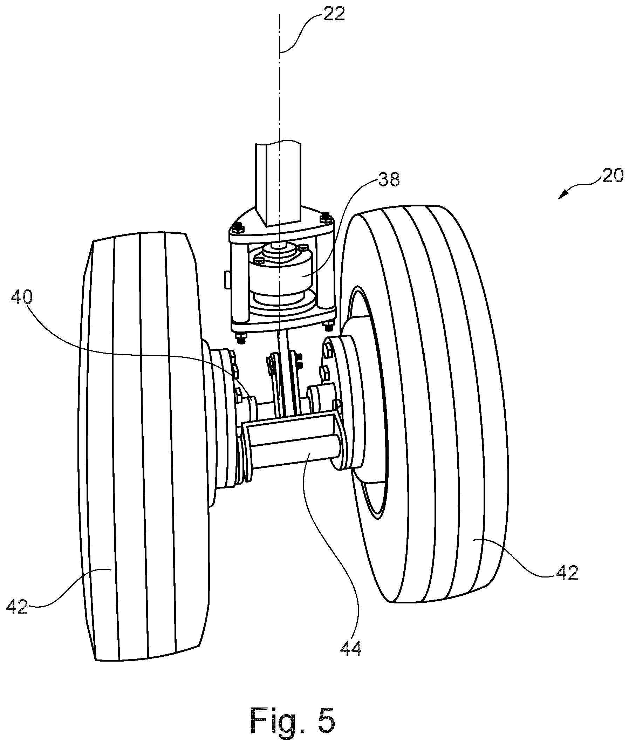

Die Figuren 1 bis 5 zeigen jeweils schematische Ansichten eines Flugzeug-Dummies 10 zum Emulieren mehrerer Flugzeugtypen, gemäß einem bevorzugten Ausführungsbeispiel der Erfindung.

Der Flugzeug-Dummy 10 dieses Ausführungsbeispiels umfasst ein Fahrgestell 12, wobei das Fahrgestell 12 eine Querachse 14 und eine senkrecht zur Querachse 14 verlaufende Längsachse 16 umfasst. An der Querachse 14 sind zwei Hinterräder 18 aufgehängt und an der Längsachse 16 ist ein Vorderrad 20 aufgehängt. Das Vorderrad 20 ist um eine senkrecht zur Längsachse 16 und senkrecht zur Querachse 14 verlaufende Vertikalachse 22 drehbar. Weiterhin sind vorliegend die Querachse 14 zur Veränderung einer Breite 24 des Flugzeug-Dummies 10 und die Längsachse zur Veränderung einer Längserstreckung 26 des Flugzeug-Dummies 10 längenveränderbar ausgestaltet.

Das Fahrgestell 12 ist vorliegend T-förmig ausgestaltet, wobei die Längsachse 16 der senkrechten Linie des "T" und die Querachse 14 der waagerechten Linie des "T" entspricht. Zudem weist das Fahrgestell 12 zwei Diagonalverstrebungen 28 auf, die die Längsachse 16 mit der Querachse 14 verbinden.

Die Querachse 14 wie auch die Längsachse 16 sind zur Längenveränderung als Teleskopauszüge ausgestaltet. Die Längsachse 16 weist zwei ineinandergreifende Stücke 30a, 30b auf und die Querachse 14 weist drei ineinandergreifende Stücke 32a, 32b, 32c auf. Das Mittelstück 32b der Querachse 14 ist zudem über die Diagonalverstrebungen 28 mit dem Stück 30b der Längsachse 16 verbunden. Die Hinterräder 18 sind an den Stücken 32a und 32c der Querachse 14 aufgehängt, das Vorderrad 20 ist am Stück 30a aufgehängt.

Wie besonders gut in Figur 2 zu erkennen ist, weisen die Teleskopauszüge der Querachse 14 und der Längsachse 16 jeweils zur Arretierung einer spezifischen Längeneinstellung einen durch eine Öffnung verlaufenden Arretierungsstift 34 auf. Über dem Vorderrad 20 weist der Flugzeug-Dummy 10 zudem eine reflektierende Fläche 36 auf. Vorliegend sind die reflektierenden Flächen 36 derart angeordnet, dass sie den Landescheinwerfern eines realen Flugzeuges entsprechen.

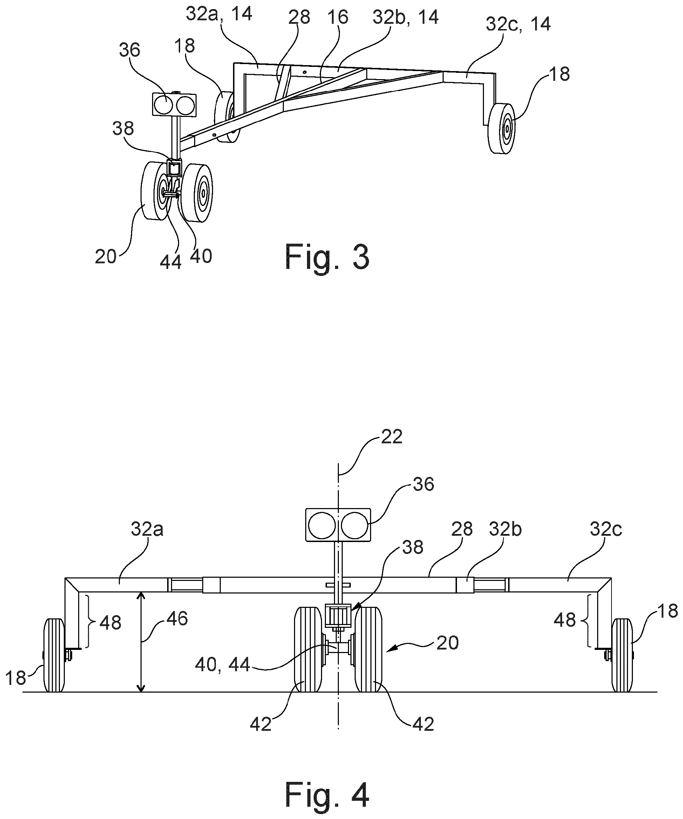

In Bezug zum Vorderrad 20 ist zudem vorgesehen, dass das Vorderrad 20 um 360 Grad um die Vertikalachse 22 drehbar ist. Wie insbesondere in den Figuren 3, 4 und 5 zu erkennen, weist der Flugzeug-Dummy 10 dieses Ausführungsbeispiels zur Drehung des Vorderrades 20 um die Vertikalachse 22 einen Gelenkkopf 38 auf. Ebenfalls ist auf diesen Figuren gut zu erkennen, dass das Vorderrad 22 eine senkrecht zur Vertikalachse 22 verlaufende Radachse 40 und zwei an der Radachse 40 angebrachte Reifen 42 umfasst. Zudem ist ein Bolzen 44 zu erkennen, der zum Koppeln an eine Schubstange eines Flugzeugschleppers ausgestaltet ist. Wie in Figur 4 dargestellt, ist für eine ausreichende Bodenfreiheit 46 die Querachse 14 an beiden Enden rechtwinkelig abgewinkelt, derart dass ein Anteil 48 der Querachse 14 parallel zur Vertikalachse 22 verläuft.

Das beschriebene Ausführungsbeispiel ist lediglich ein Beispiel, das im Rahmen der Ansprüche auf vielfältige Weise modifiziert und/oder ergänzt werden kann.

### Bezugszeichenliste

| | |
|---|---|
| Flugzeug-Dummy | 10 |
| Fahrgestell | 12 |
| Querachse | 14 |
| Längsachse | 16 |
| Hinterrad | 18 |
| Vorderrad | 20 |
| Vertikalachse | 22 |
| Breite | 24 |
| Längserstreckung | 26 |
| Diagonalverstrebung | 28 |
| Erstes Stück der Längsachse | 30a |
| Zweites Stück der Längsachse | 30b |
| Erstes Stück der Querachse | 32a |
| Zweites/Mittleres Stück der Querachse | 32b |
| Drittes Stück der Querachse | 32c |
| Arretierstift | 34 |
| Reflektierende Fläche | 36 |
| Gelenkkopf | 38 |
| Radachse | 40 |
| Reifen | 42 |
| Bolzen | 44 |
| Bodenfreiheit | 46 |
| Anteil der Querachse, der parallel zur Vertikalachse verläuft | 48 |

## Patentansprüche

1. Flugzeug-Dummy (10) zum Emulieren wenigstens eines Flugzeugtyps, insbesondere zum Emulieren mehrerer Flugzeugtypen, umfassend ein Fahrgestell (12) mit einer Querachse (14) und einer senkrecht zur Querachse (14) verlaufenden Längsachse (16),
wobei der Flugzeug-Dummy (10) wenigstens zwei an der Querachse (14) aufgehängte Hinterräder (18) und wenigstens ein Vorderrad (20) umfasst,
wobei das Vorderrad (20) um eine senkrecht zur Längsachse (16) und senkrecht zur Querachse (14) verlaufende Vertikalachse (22) drehbar ist,
und **dadurch gekennzeichnet, dass** die Querachse (14) zur Veränderung einer Breite (24) des Flugzeug-Dummies (10) und die Längsachse (16) zur Veränderung einer Längserstreckung (26) des Flugzeug-Dummies (10) längenveränderbar ausgestaltet sind.

2. Flugzeug-Dummy (10) nach dem vorhergehenden Anspruch, wobei das Fahrgestell (12) T-förmig ausgestaltet ist, und bevorzugt zwei Diagonalverstrebungen (28) umfasst und/oder wobei die Räder des Flugzeug-Dummies (10) entsprechend einem Dreieck angeordnet sind.

3. Flugzeug-Dummy (10) nach einem der vorhergehenden Ansprüche, wobei die Querachse (14) und/oder die Längsachse (16) zur Längenveränderung teleskopierbar ausgestaltet sind.

4. Flugzeug-Dummy (10) nach einem der vorhergehenden Ansprüche, wobei das Vorderrad (20) um 360 Grad um die Vertikalachse (22) drehbar ist und/oder wobei der Flugzeug-Dummy (10) zur Drehung des Vorderrades (20) um die Vertikalachse (22) einen Gelenkkopf (38) umfasst.

5. Flugzeug-Dummy (10) nach einem der vorhergehenden Ansprüche, wobei das Vorderrad (20) eine senkrecht zur Vertikalachse (22) verlaufende Radachse (40) und zwei an der Radachse (40) angebrachte Reifen (42) umfasst und/oder wobei das Vorderrad (20) als Räderpaar ausgestaltet ist.

6. Flugzeug-Dummy (10) nach einem der vorhergehenden Ansprüche, wobei das Vorderrad (20) mit einer Schubstange koppelbar ist und/oder wobei das Vorderrad (20) von beiden Seiten mittels eines Flugzeugschleppers umschließbar ist.

7. Flugzeug-Dummy (10) nach einem der vorhergehenden Ansprüche, wobei das Vorderrad (20) zum Ankoppeln an eine Schubstange einen senkrecht zur Vertikalachse (22) verlaufenden Bolzen (44) umfasst.

8. Flugzeug-Dummy (10) nach dem vorhergehenden Anspruch, wobei der Bolzen (44) um seine Längsachse drehbar gelagert ist.

9. Flugzeug-Dummy (10) nach dem vorhergehenden Anspruch, wobei eine Traglast des Vorderrades (20) wenigstens 80 t beträgt.

10. Flugzeug-Dummy (10) nach einem der vorhergehenden Ansprüche, wobei der Flugzeug-Dummy (10) über dem Vorderrad (20) angeordnete reflektierende Flächen (36) aufweist.

11. Flugzeug-Dummy (10) nach einem der vorhergehenden Ansprüche, wobei die Längserstreckung (26) des Flugzeug-Dummies (10) bei der geringsten Längeneinstellung der Längsachse (16) kleiner als 9 m ist und/oder wobei die Längserstreckung (26) des Flugzeug-Dummies (10) bei der größten Längeneinstellung der Längsachse (16) größer als 12 m ist und/oder wobei die Breite (24) des Flugzeug-Dummies (10) bei der geringsten Längeneinstellung der Querachse (14) kleiner als 3,5 m ist und/oder wobei die Breite (24) des Flugzeug-Dummies (10) bei der größten Längeneinstellung der Querachse (14) größer als 4 m ist.

12. Verwendung eines Fahrgestells (12) als Flugzeug-Dummy (10), wobei das Fahrgestell (12) eine Querachse (14) und eine senkrecht zur Querachse (14) verlaufende Längsachse (16) und wenigstens zwei an der Querachse (14) aufgehängte Hinterräder (18) und wenigstens ein Vorderrad (20) umfasst, wobei das Vorderrad (20) um eine senkrecht zur Längsachse (16) und senkrecht zur Querachse (14) verlaufende Vertikalachse (22) drehbar ist, und wobei die Querachse (14) zur Veränderung einer Breite (24) des Fahrgestells (12) und/oder die Längsachse (16) zur Veränderung einer Längserstreckung (26) des Fahrgestelles (12) längenveränderbar ausgestaltet sind.

## Claims

1. Aircraft dummy (10) for emulating at least one aircraft type, in particular for emulating a plurality of aircraft types, comprising a landing gear (12) having a transverse axle (14) and a longitudinal axle (16) which extends perpendicularly relative to the transverse axle (14),
wherein the aircraft dummy (10) comprises at least two rear wheels (18) which are suspended on the transverse axle (14) and at least one front wheel (20),
wherein the front wheel (20) can be rotated about a vertical axle (22) which extends perpendicularly to the longitudinal axle (16) and perpendicularly to the transverse axle (14),
**characterized in that** the transverse axle (14) in order to change a width (24) of the aircraft dummy (10) and the longitudinal axle (16) in order to change a longitudinal extent (26) of the aircraft dummy (10) are configured to be longitudinally adjustable.

2. Aircraft dummy (10) according to the preceding claim, wherein the landing gear (12) is configured in a T-shaped manner, and preferably comprises two diagonal struts (28) and/or wherein the wheels of the aircraft dummy (10) are arranged in accordance with a triangle.

3. Aircraft dummy (10) according to either of the preceding claims, wherein the transverse axle (14) and/or the longitudinal axle (16) are configured in a telescope-like manner in order to change the length.

4. Aircraft dummy (10) according to any one of the preceding claims, wherein the front wheel (20) can be rotated through 360 degrees about the vertical axle (22) and/or wherein the aircraft dummy (10) in order to rotate the front wheel (20) about the vertical axle (22) comprises a joint head (38).

5. Aircraft dummy (10) according to any one of the preceding claims, wherein the front wheel (20) comprises a wheel axle (40) which extends perpendicularly to the vertical axle (22) and two tires (42) which are fitted to the wheel axle (40) and/or wherein the front wheel (20) is in the form of a wheel pair.

6. Aircraft dummy (10) according to any one of the preceding claims, wherein the front wheel (20) can be coupled to a traction bar and/or wherein the front wheel (20) can be surrounded from both sides by means of an aircraft tractor.

7. Aircraft dummy (10) according to any one of the preceding claims, wherein the front wheel (20) for coupling to a traction bar comprises a pin (44) which extends perpendicularly to the vertical axle (22).

8. Aircraft dummy (10) according to the preceding claim, wherein the pin (44) is supported so as to be able to be rotated about the longitudinal axle thereof.

9. Aircraft dummy (10) according to the preceding claim, wherein a load-bearing capacity of the front wheel (20) is at least 80 t.

10. Aircraft dummy (10) according to any one of the preceding claims, wherein the aircraft dummy (10) has reflective faces (36) which are arranged above the front wheel (20).

11. Aircraft dummy (10) according to any one of the preceding claims, wherein the longitudinal extent (26) of the aircraft dummy (10) with the smallest longitudinal adjustment of the longitudinal axle (16) is less than 9 m and/or wherein the longitudinal extent (26) of the aircraft dummy (10) with the greatest longitudinal adjustment of the longitudinal axle (16) is greater than 12 m and/or wherein the width (24) of the aircraft dummy (10) with the smallest longitudinal extent of the transverse axle (14) is less than 3.5 m and/or wherein the width (24) of the aircraft dummy (10) with the greatest longitudinal adjustment of the transverse axle (14) is greater than 4 m.

12. Use of a landing gear (12) as an aircraft dummy (10), wherein the landing gear (12) comprises a transverse axle (14) and a longitudinal axle (16) which extends perpendicularly to the transverse axle (14) and at least two rear wheels (18) which are suspended on the transverse axle (14) and at least one front wheel (20), wherein the front wheel (20) can be rotated about a vertical axle (22) which extends perpendicularly to the longitudinal axle (16) and perpendicularly to the transverse axle (14) and wherein the transverse axle (14) in order to change a width (24) of the landing gear (12) and/or the longitudinal axle (16) in order to change a longitudinal extent (26) of the landing gear (12) is/are configured to be longitudinally adjustable.

## Revendications

1. Aéronef factice (10) permettant de simuler au moins un type d'aéronef, en particulier permettant de simuler plusieurs types d'aéronef, comprenant un châssis (12) comportant un axe transversal (14) et un axe longitudinal (16) s'étendant perpendiculairement à l'axe transversal (14),
l'aéronef factice (10) comprenant au moins deux roues arrière (18) suspendues à l'axe transversal (14) et au moins une roue avant (20),
la roue avant (20) étant rotative autour d'un axe vertical (22) s'étendant perpendiculairement à l'axe longitudinal (16) et perpendiculairement à l'axe transversal (14),
et **caractérisé en ce que** l'axe transversal (14) est conçu de manière variable en longueur pour la variation d'une largeur (24) de l'aéronef factice (10) et l'axe longitudinal (16) est conçu de manière variable en longueur pour la variation d'une étendue longitudinale (26) de l'aéronef factice (10).

2. Aéronef factice (10) selon la revendication précédente, dans lequel le châssis (12) est conçu en forme de T, et comprend de préférence deux entretoises diagonales (28) et/ou dans lequel les roues de l'aéronef factice (10) sont disposées selon un triangle.

3. Aéronef factice (10) selon l'une quelconque des revendications précédentes, dans lequel l'axe transversal (14) et/ou l'axe longitudinal (16) sont conçus de manière télescopique pour la variation de longueur.

4. Aéronef factice (10) selon l'une quelconque des revendications précédentes, la roue avant (20) pouvant tourner de 360 degrés autour de l'axe vertical (22) et/ou l'aéronef factice (10) comprenant une tête d'articulation (38) pour la rotation de la roue avant (20) autour de l'axe vertical (22).

5. Aéronef factice (10) selon l'une quelconque des revendications précédentes, dans lequel la roue avant (20) comprend un axe de roue (40) s'étendant perpendiculairement à l'axe vertical (42) et deux pneus (22) montés sur l'axe de roue (40) et/ou dans lequel la roue avant (20) est conçue comme une paire de roues.

6. Aéronef factice (10) selon l'une quelconque des revendications précédentes, dans lequel la roue avant (20) peut être couplée à une barre de poussée et/ou dans lequel la roue avant (20) peut être entourée des deux côtés au moyen d'un remorqueur d'aéronef.

7. Aéronef factice (10) selon l'une quelconque des revendications précédentes, dans lequel la roue avant (20) comprend un boulon (44) s'étendant perpendiculairement à l'axe vertical (22) pour l'accouplement à une barre de poussée .

8. Aéronef factice (10) selon la revendication précédente, dans lequel le boulon (44) est monté rotatif autour de son axe longitudinal.

9. Aéronef factice (10) selon la revendication précédente, dans lequel une capacité de charge de la roue avant (20) est d'au moins 80 t.

10. Aéronef factice (10) selon l'une quelconque des revendications précédentes, l'aéronef factice (10) présentant des surfaces réfléchissantes (36) disposées au-dessus de la roue avant (20).

11. Aéronef factice (10) selon l'une quelconque des revendications précédentes, dans lequel l'étendue longitudinale (26) de l'aéronef factice (10) est inférieure à 9 m lors du réglage de longueur le plus petit de l'axe longitudinal (16) et/ou dans lequel l'étendue longitudinale (26) de l'aéronef factice (10) est supérieure à 12 m lors du réglage de longueur le plus grand de l'axe longitudinal (16) et/ou dans lequel la largeur (24) de l'aéronef factice (10) est inférieure à 3,5 m lors du réglage en longueur le plus petit de l'axe transversal (14) et/ou dans lequel la largeur (24) de l'aéronef factice (10) est supérieure à 4 m lors du réglage en longueur le plus grand de l'axe transversal (14).

12. Utilisation d'un châssis (12) comme aéronef factice (10), dans lequel le châssis (12) comprend un axe transversal (14) et un axe longitudinal (16) s'étendant perpendiculairement à l'axe transversal (14) et au moins deux roues arrière (18) suspendues à l'axe transversal (14) et au moins une roue avant (20), dans lequel la roue avant (20) est rotative autour d'un axe vertical (22) s'étendant perpendiculairement à l'axe longitudinal (16) et perpendiculairement à l'axe transversal (14), et dans lequel l'axe transversal (14) est conçu de manière variable en longueur pour la variation d'une largeur (24) du châssis (12) et/ou l'axe longitudinal (16) est conçu de manière variable en longueur pour la variation d'une étendue longitudinale (26) du châssis (12).
